# EUROPÄISCHE PATENTSCHRIFT

(11) **EP 2 476 176 B1**
(45) Veröffentlichungstag und Bekanntmachung des Hinweises auf die Patenterteilung: **20.05.2015**
(21) Anmeldenummer: 10743140.5
(22) Anmeldetag: 17.08.2010
(51) Int. Cl.: H02J 3/18, H02J 3/26

(54) **VERFAHREN ZUR REGELUNG VON STROMRICHTERN UND ANORDNUNG ZUR DURCHFÜHRUNG DES VERFAHRENS**
METHOD FOR CONTROLLING CURRENT CONVERTERS AND ASSEMBLY FOR PERFORMING SAID METHOD
PROCÉDÉ DE RÉGULATION DE CONVERTISSEURS DE COURANT ET DISPOSITIF POUR LA MISE EN OEUVRE DU PROCÉDÉ

(30) Priorität: 08.09.2009 DE 102009040745
(43) Veröffentlichungstag der Anmeldung: 18.07.2012
(73) Patentinhaber: Siemens Aktiengesellschaft, 80333 München (DE)
(72) Erfinder: DOMMASCHK, Mike, 91096 Möhrendorf (DE); DORN, Jörg, 96155 Buttenheim (DE); EULER, Ingo, 91056 Erlangen (DE); KARLECIK-MAIER, Franz, 91315 Höchstadt (DE); LANG, Jörg, 95346 Stadtsteinach (DE); WÜRFLINGER, Klaus, 90419 Nürnberg (DE)
(86) Internationale Anmeldenummer: PCT/EP2010/061955
(87) Internationale Veröffentlichungsnummer: WO 2011/029700

(56) Entgegenhaltungen:
- US-A- 6 052 297
- IKEDA Y ET AL: "A UPFC-based voltage compensator with current and voltage balancing function", APPLIED POWER ELECTRONICS CONFERENCE AND EXPOSITION, 2005. APEC 2005. TWENTIETH ANNUAL IEEE AUSTIN, TX, USA 6-10 MARCH 2005, PISCATAWAY, NJ, USA,IEEE, US, Bd. 3, 6. März 2005 (2005-03-06), Seiten 1838-1844VOL.3, XP010809503, DOI: 10.1109/APEC.2005.1453299 ISBN: 978-0-7803-8975-5

## Beschreibung

Die Erfindung betrifft ein Verfahren zur Regelung von Stromrichtern zur Ausreglung der Gegenspannung in einem mehrphasigen elektrischen Energieübertragungsnetz, bei dem über eine mit dem Energieübertragungsnetz verbundene mehrphasige Anschlussleitung Phasenströme auf der Anschlussleitung erfasst und mittels Transformation in Mitsystem-Strom-Komponenten transformiert werden, Spannungen an den Phasen der Anschlussleitung erfasst und daraus mittels Transformation Gegensystem-Spannung-Komponenten gebildet werden.

Die Erfindung betrifft ferner eine Anordnung zur Durchführung des Verfahrens nach einem der vorangehenden Ansprüche mit einer Stromerfassungseinrichtung für die Phasenströme auf der Anschlussleitung und einer nachgeordneten Transformationseinrichtung zum Transformieren der Phasenströme in Mitsystem-Strom-Komponenten, einer Spannungserfassungseinrichtung für die Spannungen an den Phasen der Anschlussleitung und einer nachgeschalteten weiteren Transformationseinrichtung mit einem Transformationsbaustein zum Transformieren der Spannungen in Gegensystem-Spannung-Komponenten.

Ein solches Verfahren und eine solche Vorrichtung sind aus der US 6 052 297 A bereits bekannt. Dort ist ein Umrichter beschrieben, sowie ein Verfahren zu dessen Steuerung. Hierbei werden Phasenströme erfasst, die mit Hilfe eines Transformationsverfahrens in eine Mitsystemdarstellung überführt wurde. Darüber hinaus werden auf die Wechselspannungen mehrphasig gemessen und die dabei erhaltenen Spannungswerte mit Hilfe eines Transformationsverfahrens in ein Gegensystem abgebildet.

Aus dem Beitrag von Ikeda Y et al. "A UPFC based Voltage Compensator with Current and Voltage Balancing Funktion", Applied Power Electronics Conference and Exposition, 2005, APEC 2005, 20th Annual IEEE Austin, TX, USA, 6.-10. März 2005, Bd. 3, Seiten 1838 - 1844 ist ebenfalls ein hier relevantes Regelungsverfahren beschrieben.

Die Erfindung stellt sich die Aufgabe, ein solches Verfahren so auszugestalten, dass es in jedem Betriebspunkt einfach zu parametrieren ist.

Zur Lösung dieser Aufgabe dient ein Verfahren zur Regelung von Stromrichtern zur Ausregelung der Gegenspannung in einem mehrphasigen elektrischen Energieübertragungsnetz, bei dem über eine mit dem Energieübertragungsnetz verbundene mehrphasige Anschlussleitung Phasenströme auf der Anschlussleitung erfasst und mittels Transformation in Mitsystem-Strom-Komponenten transformiert werden; außerdem werden Spannungen an den Phasen der Anschlussleitung erfasst und daraus mittels Transformation Gegensystem-Spannung-Komponenten gebildet, die Gegensystem-Spannung-Komponenten einem Spannungsregler zugeführt, in dem zur Reduzierung des Gegensystems dienende Gegensystem-Strom-Komponenten gebildet werden, und die Gegensystem-Strom-Komponenten werden einem Sollwerte-Eingang und die Mitsystem-Strom-Komponenten einem Istwerte-Eingang eines Stromreglers zugeführt, dessen Ausgangsgrößen nach Rücktransformation als Schaltströme für Schalteinheiten der Stromrichter dienen.

Ein wesentlicher Vorteil des erfindungsgemäßen Verfahrens besteht darin, dass bei ihm die Gegensystem-Spannung durch eine Regelung des Gegensystem-Stromes ausgeglichen wird. Dabei wird sichergestellt, dass der Gegensystem-Strom und die Gegensystem-Spannung eine reine Gegensystem-Blindleistung zur Stützung der Spannung im Netz abgeben, wobei weder der Gegensystem-Strom noch die Gegensystem-Spannung eine Nullkomponente enthalten. Die von dem Spannungsregler generierten Gegensystem-Strom-Komponenten werden dabei mittels des Stromreglers in einer inneren Regelschleife geregelt. Es ist somit eine Kaskadenregelung mit dem Spannungsregler und dem Stromregler gebildet, die in jedem Betriebspunkt einfach zu parametrieren ist und ohne dynamische Begrenzungen und Kompensationen auskommt. Die Regelung der Gegen-System-Spannung ist dabei von Strom-, Spannungs-, Blindleistungs- und Wirkleistungs-Sollwerten entkoppelt.

In das erfindungsgemäße Verfahren kann gemäß einer Weiterbildung der Erfindung in vorteilhafter Weise eine Blindleistungsspannungsregelung einbezogen werden, indem aus den Spannungen an den Phasen der Anschlussleitung mittels Transformation Mitsystem-Spannung-Komponenten gebildet werden, die Mitsystem-Spannung-Komponenten einem Blindleistungsspannungsregler zugeführt werden, dessen Ausgangsstrom einem Eingang eines Summierers zugeführt wird, und die Gegensystem-Strom-Komponenten am Ausgang des Spannungsreglers einem weiteren Eingang des Summierers zugeführt werden, dessen Ausgang mit dem Sollwerte-Eingang des Stromreglers verbunden ist. Damit lässt sich die Gegensystem-Blindleistung begrenzen.

Ferner wird es als vorteilhaft angesehen, wenn das erfindungsgemäße Verfahren insoweit ergänzt wird, dass die Mitsystem-Spannung-Komponenten einem Wirkleistungsspannungsregler zugeführt werden, dessen Ausgangsstrom einem zusätzlichen Eingang des Summierers zugeführt wird.

In Abweichung von den oben beschriebenen ergänzenden Ausgestaltungen des erfindungsgemäßen Verfahrens kann es auch vorteilhaft sein, wenn aus den Spannungen an den Phasen der Anschlussleitung mittels Transformation Mitsystem-Spannung-Komponenten gebildet werden, die Mitsystem-Spannung-Komponenten einem Wirkleistungsspannungsregler zugeführt werden, dessen Ausgangsstrom einem zusätzlichen Eingang eines Summierers zugeführt wird, und die Gegensystem-Strom-Komponenten am Ausgang des Spannungsreglers einem weiteren Eingang des Summierers zugeführt werden, dessen Ausgang mit dem Sollwerte-Eingang des Stromreglers verbunden ist. Auf diese Weise lässt sich unter Vereinfachung des gesamten Verfahrens unter Verzicht auf eine Blindleistungsspannungsregelung nur eine Wirkleistungsregelung in das erfindungsgemäße Verfahren einbeziehen.

Bei dem erfindungsgemäßen Verfahren können die Gegensystem-Spannung-Komponenten und die Mitsystem-Spannung-Komponenten in unterschiedlicher Weise gebildet werden; als vorteilhaft wird es jedoch angesehen, wenn diese Komponenten mittels Clark-Transformation mit anschließender Filterung und Park-Transformation gebildet werden. Als Spannungsregler können bei dem erfindungsgemäßen Verfahren unterschiedlich aufgebaute Regler verwendet werden; als vorteilhaft wird es jedoch angesehen, wenn ein Spannungsregler mit jeweils einem PI-Regler für die Gegensystem-Spannung-Komponenten verwendet wird, die Ausgangsströme der beiden PI-Regler einer Vektordrehung zur Erzielung einer -90°-Phasenlage zu den Gegensystem-Spannung-Komponenten unterworfen und frei wählbar begrenzt werden.

Der Erfindung liegt ferner die Aufgabe zugrunde, eine Anordnung zur Durchführung des oben beschriebenen erfindungsgemäßen Verfahrens anzugeben, die sich vergleichsweise einfach parametrieren lässt.

Zur Durchführung dieses Verfahrens weist eine Anordnung erfindungsgemäß eine Stromerfassungseinrichtung für die Phasenströme auf der Anschlussleitung mit einer nachgeordneten Transformationseinrichtung zum Transformieren der Phasenströme in Mitsystem-Strom-Komponenten auf sowie eine Spannungserfassungseinrichtung für die Spannungen an den Phasen der Anschlussleitung mit einer nachgeschalteten weiteren Transformationseinrichtung mit einem Transformationsbaustein zum Transformieren der Spannungen in Gegensystem-Spannung-Komponenten; dem Transformationsbaustein ist ein Spannungsregler nachgeordnet, in dem zur Reduzierung des Gegensystems dienende Gegensystem-Strom-Komponenten gebildet werden, und dem Spannungsregler ist ein Stromregler mit einem die Gegensystem-Strom-Komponenten aufnehmenden Sollwerte-Eingang und einem die Mitsystem-Strom-Komponenten erfassenden Istwerte-Eingang nachgeordnet, wobei der Stromregler ausgangsseitig über eine Rücktransformationseinrichtung mit Schalteingängen von Schalteinheiten der Stromrichter verbunden ist.

Diese Anordnung zeichnet sich durch die Vorteile auf, die oben bereits im Zusammenhang mit dem erfindungsgemäßen Verfahren im Einzelnen angegeben worden sind.

Bei der erfindungsgemäßen Anordnung weist in vorteilhafter Weise die weitere Transformationseinrichtung einen weiteren Transformationsbaustein auf, der aus den Spannungen an den Phasen der Anschlussleitung mittels Transformation Mitsystem-Spannung-Komponenten an seinem Ausgang bildet; dem weiteren Transformationsbaustein ist ein Blindleistungsspannungsregler nachgeordnet, dessen Ausgang mit einem Eingang eines nachgeschalteten Summierers verbunden ist, und der Ausgang des Spannungsreglers ist an einen weiteren Eingang des Summierers angeschlossen, dessen Ausgang mit dem Sollwerte-Eingang des Stromreglers verbunden ist. Mit einer solchen Anordnung lässt sich zusätzlich eine Blindleistungsspannungsregelung mit einbeziehen.

Soll auch eine Wirkleistungsregelung vorgenommen werden, dann ist vorteilhafterweise an den weiteren Transformationsbaustein ein Wirkleistungsspannungsregler angeschlossen, dessen Ausgang mit einem zusätzlichen Eingang des Summierers verbunden ist.

Die erfindungsgemäße Anordnung arbeitet auch dann zuverlässig, wenn unter Verzicht auf eine Blindleistungsspannungsregelung eine Ausführung gewählt wird, bei der die weitere Transformationseinrichtung einen weiteren Transformationsbaustein aufweist, der aus den Spannungen an den Phasen der Anschlussleitung mittels Transformation Mitsystem-Spannung-Komponenten an seinem Ausgang bildet, dem weiteren Transformationsbaustein ein Wirkleistungsspannungsregler nachgeordnet ist, dessen Ausgangs mit einem zusätzlichen Eingang eines Summierers verbunden ist, und der Ausgang des Spannungsreglers an einen weiteren Eingang des Summierers angeschlossen ist, dessen Ausgang mit dem Sollwerte-Eingang des Stromreglers verbunden ist.

Die Transformationsbausteine der weiteren Transformationseinrichtung können in unterschiedlicher Weise ausgebildet sein; vorteilhafterweise enthält der eine Transformationsbaustein ein Filter zur Bildung der Gegensystem-Spannung-Komponenten und ein diesem nachgeordneten Park-Transformator und der weitere Transformationsbaustein ein weiteres Filter zur Bildung der Mitsystem-Spannung-Komponenten und ein diesem nachgeordneten weiteren Park-Transformator.

Die weitere Transformationseinrichtung weist vorteilhafterweise eingangsseitig einen Clark-Transformator auf.

Hinsichtlich des Spannungsreglers der erfindungsgemäßen Anordnung wird eine Ausführung als vorteilhaft angesehen, bei der der Spannungsregler jeweils einen PI-Regler für die Gegensystem-Spannung-Komponenten aufweist und den beiden PI-Reglern eine Anordnung zur Vektordrehung unter Erzielung einer -90°-Phasenlage zu den Gegensystem-Spannung-Komponenten und eine Begrenzer-Anordnung nachgeschaltet sind. Der Vorteil dieser Ausführungsform des Spannungsreglers besteht darin, dass er verhältnismäßig einfach und damit kostengünstig ausgebildet sein kann.

Zur weiteren Erläuterung der Erfindung ist in
- Figur 1: ein Ausführungsbeispiel einer Anordnung zur Durchführung des erfindungsgemäßen Verfahrens in Gestalt eines statischen Blindleistungskompensators in Form eines Blockschaltbildes und in
- Figur 2: ein Ausführungsbeispiel des in der Anordnung nach Figur 1 gezeigten Spannungsreglers wiedergegeben.

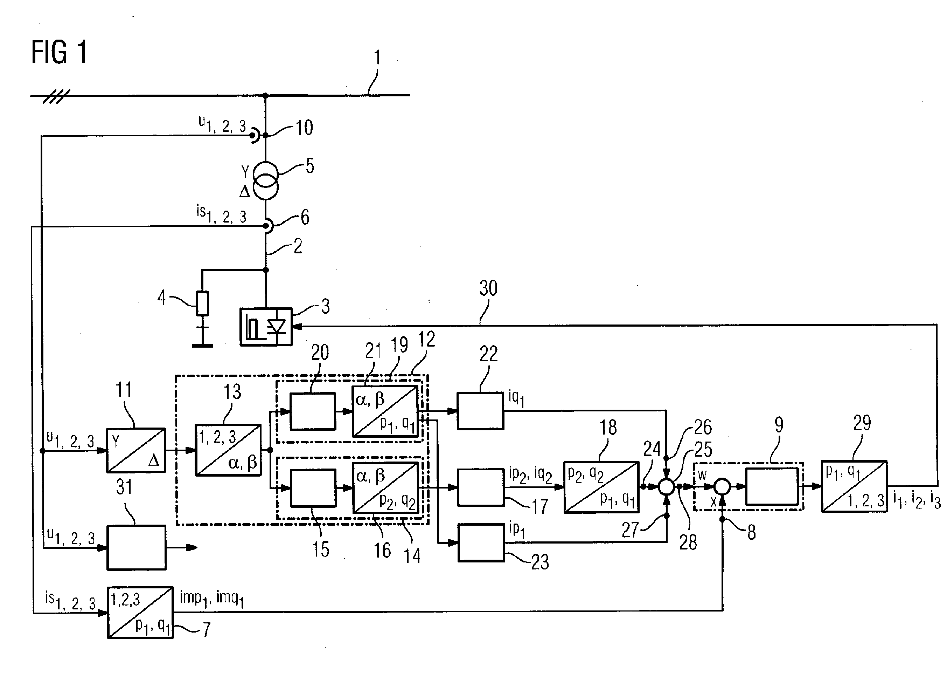

Wie die Figur 1 zeigt, ist an eine mehrere Phasen aufweisende Hochspannungs-Wechselspannungsleitung 1 als elektrisches Energieübertragungsnetz über eine mehrphasige Anschlussleitung 2 ein Blindleistungskompensator 3 angeschlossen, dem in üblicher Weise ein Filter 4 parallel geschaltet ist. In der Anschlussleitung 2 befindet sich in dem dargestellten Ausführungsbeispiel ein Stern-Dreieck-Transformator 5.

In der Anschlussleitung 2 liegt außerdem eine Stromerfassungseinrichtung 6, die in üblicher Weise aus Stromwandlern besteht und daher hier der besseren Übersichtlichkeit halber nicht im Einzelnen dargestellt ist. Von der Stromerfassungseinrichtung 6 werden sekundäre Ströme is1, is2 und is3 für jede Phase der Anschlussleitung 2 abgegeben und einer Transformationseinrichtung 7 zugeführt, die die erfassten Ströme is1, is2 und is3 in Mitsystem-Strom-Komponenten imp1 und imq1 in an sich bekannter Weise transformiert. Die Mitsystem-Strom-Komponenten imp1 und imq1 werden als Ist-Werte einem Ist-Werte-Eingang 8 eines später noch näher beschriebenen Stromreglers 9 zugeführt.

Mittels einer ebenfalls im Einzelnen der besseren Übersichtlichkeit halber nicht gezeigten Spannungserfassungseinrichtung 10 werden Spannungen u1, u2 und u3 an der Hochspannungs-Wechselspannungsleitung 1 erfasst und einem Stern-Dreieck-Wandler 11 zugeführt, der in bekannter Weise ausgebildet ist und daher hier nicht im Einzelnen beschrieben zu werden braucht.

Dem Stern-Dreieck-Wandler 11 ist eine weitere Transformationseinrichtung 12 nachgeordnet, die eingangsseitig einen Clark-Transformator 13 enthält, mittels dessen eine an sich bekannte Clark-Transformation durchgeführt wird, so dass am Ausgang des Clark-Transformators Spannungs-Komponenten α und β anstehen. Ausgangsseitig ist an den Clark-Transformator 13 ein Transformationsbaustein 14 angeschlossen, der ein Gegensystem-Filter 15 und ein diesem nachgeordneten Park-Transformator 16 enthält. Mittels dieses Park-Transformators 16 wird eine an sich bekannte Park-Transformation vorgenommen, so dass am Ausgang des Transformationsbausteins 14 Gegensystem-Spannungs-Komponenten p2 und q2 auftreten.

An den Transformationsbaustein 14 ist ein Spannungsregler 17 angeschlossen, mit dem eine Gegensystem-Spannungs-Regelung vorgenommen wird. Hier erfolgt eine Regelung mit einem Sollwert "Null", so dass am Ausgang des Spannungsreglers Gegensystem-Strom-Komponenten ip2 und iq2 entstehen, die in einem nachgeordneten Transformierer 18 in Gegensystem-Strom-Komponenten ip1 und iq1 umgesetzt werden.

Die weitere Transformationseinrichtung 12 enthält ferner einen weiteren Transformationsbaustein 19, der ebenfalls an den Clark-Transformator 13 angeschlossen ist und eingangsseitig ein Mitsystem-Filter 20 aufweist. Diesem ist ein weiterer Park-Transformator 21 nachgeordnet, der eine Park-Transformation durchführt, so dass an seinem Ausgang Mitsystem-Spannung-Komponenten p1 und q1 entstehen. Die Komponente q1 wird einem nachgeordneten Blindleistungs-Spannungsregler 22 zugeführt, der mit einem vorgegebenen Spannungs-Sollwert arbeitet und an seinem Ausgang eine Mitsystem-Strom-Komponente iq1 erzeugt.

Der weitere Clark-Transformator 21 ist außerdem mit einem Wirkleistungsregler 23 verbunden und wird mit der realen Mitsystem-Spannungs-Komponente p1 beaufschlagt. Auch dieser Regler hat einen eingestellten Leistungssollwert und erzeugt an seinem Ausgang eine Mitsystem-Strom-Komponente ip1.

Die Ausgänge des Spannungsreglers 17 bzw. des nachgeordneten Transformierers 18 sind an einen Eingang 24 eines Summierers 25 geführt, der mit einem weiteren Eingang 26 am Ausgang des Blindleistungsreglers 22 liegt. Ein zusätzlicher Eingang 27 des Summierers 25 ist mit dem Ausgang des Wirkleistungsreglers 23 verbunden.

Der Ausgang des Summierers 25 liegt an einem Sollwerte-Eingang 28 des Stromreglers 9, der an seinem Ausgang entsprechende Mitsystem-Strom-Komponenten erzeugt. Diese werden einem Baustein 29 zur Rücktransformation zugeführt, in dem Schaltströme i1, i2 und i3 für nicht dargestellte Schalteinheiten der Stromrichter des Blindleistungskompensators 3 gebildet werden, die über eine Leitung 30 dem Blindleistungskompensator 3 zugeführt werden.

Ergänzend ist noch anzumerken, dass an die Spannungserfassungseinrichtung 10 auch eine PLL (Phase-Locked-Loop)-Schaltung 31 angeschlossen ist, die in nicht näher dargestellter Weise zur Synchronisierung der einzelnen Komponenten der dargestellten Anordnung dient.

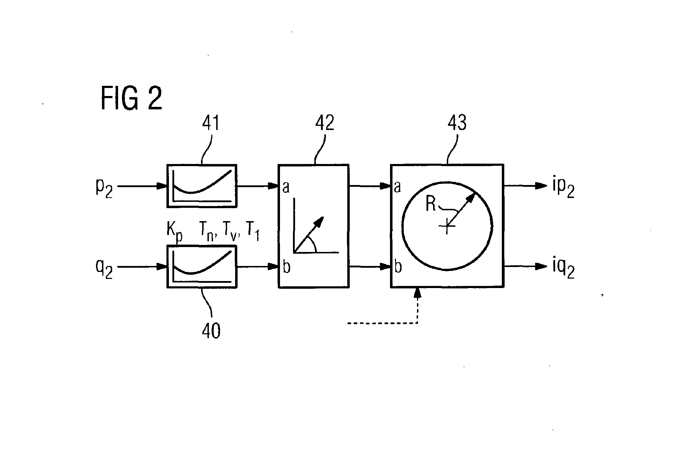

In Figur 2 ist ein Ausführungsbeispiel für den Spannungsregler 17 gemäß Figur 1 gezeigt. Der Spannungsregler enthält eingangsseitig jeweils einen PI-Regler 40 bzw. 41, die an ihren Eingängen mit den Gegensystem-Spannung-Komponenten p2 und q2 beaufschlagt sind, also mit den Ausgangsgrößen des Park-Transformators 16 gemäß Figur 1. Die Ausgangsgrößen der beiden PI-Regler 40 und 41 werden einer Anordnung 42 zugeführt, in der eine Drehung derart vorgenommen wird, dass die Phasenlage des Vektors 90° zu den Gegensystem-Spannungs-Komponenten steht. Der Anordnung zur Vektordrehung 42 ist eine Begrenzer-Anordnung 43 nachgeordnet, in der vektoriell eine Begrenzung entsprechend den Eigenschaften des Netzes mit der Hochspannungs-Wechselspannungsleitung 1 eingestellt wird. Ergebnis sind Gegensystem-Ströme ip2 und iq2, die über den Transformierer 18 zusammen mit dem Gegensystem-Stromkomponenten ip1 und iq1 und dem Mitsystem-Stromkomponenten imp1 und imq1 dem Stromregler 9 zugeführt werden. In dem Baustein 29 zur Rücktransformation werden die Ausgangsgröße des Stromreglers 9 in die bereits erwähnten Schaltströme i1, i2 und i3 umgesetzt werden, so dass insgesamt mit dem Spannungsregler 17 - und gegebenenfalls dem Blindleistungs-Spannungsregler 22 und dem Wirkleistungs-Regler 23 - zusammen mit dem Stromregler 9 eine Kaskadenregelung geschaffen ist, die sich besonders gut parametrieren lässt.

## Patentansprüche

1. Verfahren zur Regelung von Stromrichtern zur Ausreglung der Gegenspannung in einem mehrphasigen elektrischen Energieübertragungsnetz (1), bei dem über eine mit dem Energieübertragungsnetz (12) verbundene mehrphasige Anschlussleitung (2)
• Phasenströme auf der Anschlussleitung (2) erfasst und mittels Transformation in Mitsystem-Strom-Komponenten transformiert werden,
• Spannungen an den Phasen der Anschlussleitung (2) erfasst und daraus mittels Transformation Gegensystem-Spannung-Komponenten gebildet werden,
**dadurch gekennzeichnet, dass**
• die Gegensystem-Spannung-Komponenten einem Spannungsregler (17) zugeführt werden, in dem zur Reduzierung des Gegensystems dienende Gegensystem-Strom-Komponenten gebildet werden, und
• die Gegensystem-Strom-Komponenten einem Sollwerte-Eingang (28) und die Mitsystem-Strom-Komponenten einem Istwerte-Eingang (8) eines Stromreglers (9) zugeführt werden, dessen Ausgangsgrößen nach Rücktransformation als Schaltströme für Schalteinheiten der Stromrichter dienen.

2. Verfahren nach Anspruch 1,
**dadurch gekennzeichnet, dass**
• aus den Spannungen an den Phasen der Anschlussleitung (2) mittels Transformation Mitsystem-Spannung-Komponenten gebildet werden,
• die Mitsystem-Spannung-Komponenten einem Blindleistungsspannungsregler (22) zugeführt werden, dessen Ausgangsstrom einem Eingang (26) eines Summierers (25) zugeführt wird, und
• die Gegensystem-Strom-Komponenten am Ausgang des Spannungsreglers einem weiteren Eingang (24) des Summierers (25) zugeführt werden, dessen Ausgang mit dem Sollwerte-Eingang (28) des Stromreglers (9) verbunden ist.

3. Verfahren nach Anspruch 2,
**dadurch gekennzeichnet, dass**
• die Mitsystem-Spannung-Komponenten einem Wirkleistungsspannungsregler (23) zugeführt werden, dessen Ausgangsstrom einem zusätzlichen Eingang (27) des Summierers (25) zugeführt wird.

4. Verfahren nach Anspruch 1,
**dadurch gekennzeichnet, dass**
• aus den Spannungen an den Phasen der Anschlussleitung (2) mittels Transformation Mitsystem-Spannung-Komponenten gebildet werden,
• die Mitsystem-Spannung-Komponenten einem Wirkleistungsspannungsregler (23) zugeführt werden, dessen Ausgangsstrom einem zusätzlichen Eingang (27) eines Summierers (25) zugeführt wird, und
• die Gegensystem-Strom-Komponenten am Ausgang des Spannungsreglers (17) einem weiteren Eingang (24) des Summierers (25) zugeführt werden, dessen Ausgang mit dem Sollwerte-Eingang (28) des Stromreglers (25) verbunden ist.

5. Verfahren nach einem der vorangehenden Ansprüche, **dadurch gekennzeichnet, dass** die Gegensystem-Spannung-Komponenten und die Mitsystem-Spannung-Komponenten mittels Clark-Transformation mit anschließender Filterung und Park-Transformation gebildet werden.

6. Verfahren nach einem der vorangehenden Ansprüche,
**dadurch gekennzeichnet, dass**
• als Spannungsregler (17) ein Spannungsregler mit jeweils einem PI-Regler (40, 41)) für die Gegensystem-Spannung-Komponenten verwendet wird und
• die Ausgangsströme der beiden PI-Regler (40, 41) einer Vektordrehung zur Erzielung einer -90°-Phasenlage zu den Gegensystem-Spannung-Komponenten unterworfen und frei wählbar begrenzt werden.

7. Anordnung zur Durchführung des Verfahrens nach einem der vorangehenden Ansprüche mit
• einer Stromerfassungseinrichtung (6) für die Phasenströme auf der Anschlussleitung (2) und einer nachgeordneten Transformationseinrichtung (7) zum Transformieren der Phasenströme in Mitsystem-Strom-Komponenten,
• einer Spannungserfassungseinrichtung (10) für die Spannungen an den Phasen der Anschlussleitung (2) und einer nachgeschalteten weiteren Transformationseinrichtung (12) mit einem Transformationsbaustein (15) zum Transformieren der Spannungen in Gegensystem-Spannung-Komponenten,
**dadurch gekennzeichnet, dass**
• einen dem Transformationsbaustein (15) nachgeordneten Spannungsregler (17), in dem zur Reduzierung des Gegensystems dienende Gegensystem-Strom-Komponenten gebildet werden, und
• einen dem Spannungsregler (17) nachgeordneten Stromregler (9) mit einem die Gegensystem-Strom-Komponenten aufnehmenden Sollwerte-Eingang (28) und einem die Mitsystem-Strom-Komponenten erfassenden Istwerte-Eingang (8), wobei der Stromregler (9) ausgangsseitig über eine Rücktransformationseinrichtung (29) mit Schalteingängen von Schalteinheiten der Stromrichter verbunden ist.

8. Anordnung nach Anspruch 7, **dadurch gekennzeichnet, dass**
• die weitere Transformationseinrichtung (12) einen weiteren Transformationsbaustein (19) aufweist, der aus den Spannungen an den Phasen der Anschlussleitung (2) mittels Transformation Mitsystem-Spannung-Komponenten an seinem Ausgang bildet,
• dem weiteren Transformationsbaustein (19) ein Blindleistungsspannungsregler (22) nachgeordnet ist, dessen Ausgang mit einem Eingang (26) eines nachgeschalteten Summierers (25) verbunden ist, und
• der Ausgang des Spannungsreglers (17) an einen weiteren Eingang (24) des Summierers (25) angeschlossen ist, dessen Ausgang mit dem Sollwerte-Eingang (28) des Stromreglers (9) verbunden ist.

9. Anordnung nach Anspruch 7, **dadurch gekennzeichnet, dass**
• an den weiteren Transformationsbaustein (19) ein Wirkleistungsspannungsregler (23) angeschlossen ist, dessen Ausgang mit einem zusätzlichen Eingang (27) des Summierers (25) verbunden ist.

10. Anordnung nach Anspruch 7, **dadurch gekennzeichnet, dass**
• die weitere Transformationseinrichtung (12) einen weiteren Transformationsbaustein (19) aufweist, der aus den Spannungen an den Phasen der Anschlussleitung (2) mittels Transformation Mitsystem-Spannung-Komponenten an seinem Ausgang bildet,
• dem weiteren Transformationsbaustein (19) ein Wirkleistungsspannungsregler (23) nachgeordnet ist, dessen Ausgang mit einem zusätzlichen Eingang (27) eines Summierers (25) verbunden ist, und
• der Ausgang des Spannungsreglers (17) an einen weiteren Eingang (24) des Summierers (25) angeschlossen ist, dessen Ausgang mit dem Sollwerte-Eingang (28) des Stromreglers (9) verbunden ist.

11. Anordnung nach einem der Ansprüche 7 bis 10,
**dadurch gekennzeichnet, dass**
• der eine Transformationsbaustein (14) ein Filter (15) zur Bildung der Gegensystem-Spannung-Komponenten und ein diesem nachgeordneten Park-Transformator (16) enthält und
• der weitere Transformationsbaustein (19) ein weiteres Filter (20) zur Bildung der Mitsystem-Spannung-Komponenten und ein diesem nachgeordneten weiteren Park-Transformator (21) enthält.

12. Anordnung nach einem der Ansprüche 7 bis 11,
**dadurch gekennzeichnet, dass**
• die weitere Transformationseinrichtung (19) eingangsseitig einen Clark-Transformator (13) aufweist.

13. Anordnung nach einem der Ansprüche 7 bis 12,
**dadurch gekennzeichnet, dass**
• der Spannungsregler (17) jeweils einen PI-Regler (40, 41) für die Gegensystem-Spannung-Komponenten aufweist und
• den beiden PI-Reglern (40, 41) eine Anordnung zur Vektordrehung (42) unter Erzielung einer -90°-Phasenlage zu den Gegensystem-Spannung-Komponenten (43) und eine Begrenzer-Anordnung nachgeschaltet sind.

## Claims

1. Method for regulation of power converters for regulating out the back e.m.f. in a polyphase electrical power transmission system (1), in which, via a polyphase connecting line (2) which is connected to the power transmission system (12) :
• phase currents on the connecting line (2) are detected and are transformed by means of transformation to positive phase-sequence system current components,
• voltages on the phases of the connecting line (2) are detected and negative phase-sequence system voltage components are formed therefrom by means of transformation,
**characterized in that**
• the negative phase-sequence system voltage components are supplied to a voltage regulator (17), in which negative phase-sequence system current components which are used to reduce the negative phase-sequence system are formed, and
• the negative phase-sequence system current components are supplied to a nominal value input (28), and the positive phase-sequence system current components are supplied to an actual value input (8), of a current regulator (9), and its output variables are used, after back-transformation, as switching currents for switching units of the power converters.

2. Method according to Claim 1, **characterized in that**
• positive phase-sequence system voltage components are formed by means of transformation from the voltages on the phases of the connecting line (2),
• the positive phase-sequence system voltage components are supplied to a reactive-power voltage regulator (22), and its output current is supplied to an input (26) of an adder (25), and
• the negative phase-sequence system current components at the output of the voltage regulator are supplied to a further input (24) of the adder (25), and its output is connected to the nominal value input (28) of the current regulator (9).

3. Method according to Claim 2, **characterized in that**
• the positive phase-sequence system voltage components are supplied to a real-power voltage regulator (23), and its output current is supplied to an additional input (27) of the adder (25).

4. Method according to Claim 1, **characterized in that**
• positive phase-sequence system voltage components are formed by means of transformation from the voltages on the phases of the connecting line (2),
• the positive phase-sequence system voltage components are supplied to a real-power voltage regulator (23), and its output current is supplied to an additional input (27) of an adder (25), and
• the negative phase-sequence system current components at the output of the voltage regulator (17) are supplied to a further input (24) of the adder (25), and its output is connected to the nominal value input (28) of the current regulator (25).

5. Method according to one of the preceding claims, **characterized in that** the negative phase-sequence system voltage components and the positive phase-sequence system voltage components are formed by means of Clark transformation with subsequent filtering and Park transformation.

6. Method according to one of the preceding claims, **characterized in that**
• a voltage regulator in each case having a PI regulator (40, 41) is used as a voltage regulator (17) for the negative phase-sequence system voltage components, and
• the output currents of the two PI regulators (40, 41) are subjected to vector rotation in order to achieve a -90° phase angle with respect to the negative phase-sequence system voltage components, and are freely variably limited.

7. Arrangement for carrying out the method according to one of the preceding claims, having:
• a current detection device (6) for the phase currents on the connecting line (2) and a downstream transformation device (7) for transformation of the phase currents to positive phase-sequence system current components,
• a voltage detection device (10) for the voltages on the phases of the connecting line (2) and a downstream further transformation device (12) having a transformation module (15) for transformation of the voltages to negative phase-sequence system voltage components,
**characterized in that**
• a voltage regulator (17) which is arranged downstream from the transformation module (15) and in which negative phase-sequence system current components which are used to reduce the negative phase-sequence system are formed, and
• a current regulator (9), which is connected downstream from the voltage regulator (17), has a nominal value input (28) which receives the negative phase-sequence system current components and has an actual value input (8) which detects the positive phase-sequence system current components, with the output side of the current regulator (9) being connected via a back-transformation device (29) to switching inputs of switching units of the power converters.

8. Arrangement according to Claim 7, **characterized in that**
• the further transformation device (12) has a further transformation module (19) which forms positive phase-sequence system voltage components at its output by means of transformation from the voltages on the phases of the connecting line (2),
• a reactive-power voltage regulator (22) is arranged downstream from the further transformation module (19) and its output is connected to an input (26) of a downstream adder (25), and
• the output of the voltage regulator (17) is connected to a further input (24) of the adder (25), and its output is connected to the nominal value input (28) of the current regulator (9).

9. Arrangement according to Claim 7, **characterized in that**
• a real-power voltage regulator (23) is connected to the further transformation module (19) and its output is connected to an additional input (27) of the adder (25).

10. Arrangement according to Claim 7, **characterized in that**
• the further transformation device (12) has a further transformation module (19), which forms positive phase-sequence system voltage components at its output by means of transformation from the voltages on the phases of the connecting line (2),
• a real-power voltage regulator (23) is arranged downstream from the further transformation module (19) and its output is connected to an additional input (27) of an adder (25), and
• the output of the voltage regulator (17) is connected to a further input (24) of the adder (25), and its output is connected to the nominal value input (28) of the current regulator (9).

11. Arrangement according to one of Claims 7 to 10, **characterized in that**
• one transformation module (14) contains a filter (15) for formation of the negative phase-sequence system voltage components, and a Park transformer (16) arranged downstream therefrom, and
• the further transformation module (19) contains a further filter (20) for formation of the positive phase-sequence system voltage components, and a further Park transformer (21) arranged downstream therefrom.

12. Arrangement according to one of Claims 7 to 11, **characterized in that**
• the further transformation device (19) has a Clark transformer (13) on the input side.

13. Arrangement according to one of Claims 7 to 12, **characterized in that**
• the voltage regulator (17) in each case has a PI regulator (40, 41) for the negative phase-sequence system voltage components, and
• an arrangement for vector rotation (42), in order to achieve a -90° phase angle with respect to the negative phase-sequence system voltage components (43), and a limiter arrangement are connected downstream from the two PI regulators (40, 41).

## Revendications

1. Procédé de régulation de convertisseurs de courant pour la régulation de la tension inverse dans un réseau ( 1 ) de transmission d'énergie électrique polyphasée, dans lequel, par une ligne ( 2 ) de connexion polyphasée reliée au réseau ( 12) de transmission d'énergie,
• des courants de phase sont détectés sur la ligne ( 2 ) de connexion et sont transformés en des composantes de courant de système direct au moyen d'une transformation,
• des tensions sont détectées sur les phases de la ligne ( 2 ) de connexion et il en est formé, au moyen d'une transformation, des composantes de tension de système inverse, **caractérisé en ce que**
• les composantes de tension de système inverse sont appliquées à un régleur ( 17 ) de tension, dans lequel il est formé des composantes de courant de système inverse servant à réduire le système inverse, et
• les composantes de courant de système inverse sont appliquées à une entrée ( 28 ) de valeurs de consigne et les composantes de courant de système direct sont appliquées à une entrée ( 8 ) de valeurs réelles d'un régleur ( 9 ) de courant, dont les grandeurs de sortie servent, après transformation en retour, de courants de commutation pour des unités de commutation des convertisseurs de courant.

2. Procédé suivant la revendication 1,
**caractérisé en ce que**
• à partir des tensions sur les phases de la ligne ( 2 ) de connexion, on forme des composantes de tension de système direct au moyen d'une transformation,
• on applique les composantes de tension de système direct à un régleur ( 22 ) de tension de puissance réactive, dont le courant de sortie est envoyé à une entrée ( 26 ) d'un sommateur ( 25 ) et
• les composantes de courant de système inverse, à la sortie du régleur de tension, sont appliquées à une autre entrée ( 24 ) du sommateur ( 25 ), dont la sortie est reliée à l'entrée ( 28 ) de valeurs de consigne du régleur ( 9 ) de courant.

3. Procédé suivant la revendication 2,
**caractérisé en ce que**
• les composantes de tension de système direct sont appliquées à un régleur ( 23 ) de tension de puissance réactive, dont le courant de sortie est envoyé à une entrée ( 27 ) supplémentaire du sommateur ( 25 ).

4. Procédé suivant la revendication 1,
**caractérisé en ce que**
• à partir des tensions sur la phase de la ligne ( 2 ) de connexion, on forme des composantes de tension de système direct au moyen d'une transformation,
• on applique les composantes de tension de système direct à un régleur ( 23 ) de tension de puissance réactive, dont le courant de sortie est envoyé à une entrée ( 27 ) supplémentaire d'un sommateur ( 25 ) et
• les composantes de courant de système inverse à la sortie du régleur ( 17 ) de tension sont envoyées à une autre entrée ( 24 ) du sommateur ( 25 ), dont la sortie est reliée à l'entrée ( 28 ) de valeurs de consigne du régleur ( 25 ) de courant.

5. Procédé suivant l'une des revendications précédentes,
**caractérisé en ce que**
les composantes de tension de système inverse et les composantes de tension de système direct sont formées au moyen d'une transformation de Clark avec filtrage ensuite et transformation de Park.

6. Procédé suivant l'une des revendications précédentes,
**caractérisé en ce que**
• on utilise comme régleur ( 17 ) de tension un régleur de tension ayant respectivement un régleur PI ( 40, 41 ) pour les composantes de tension de système inverse et
• les courants de sortie des deux régleurs PI ( 40, 41 ) sont soumis à une rotation vectorielle pour l'obtention d'une position en phase à 90° par rapport aux composantes de tension de système inverse et sont limités au choix.

7. Agencement pour effectuer le procédé suivant l'une des revendications précédentes, comprenant
• un dispositif ( 6 ) de détection du courant pour les courants de phase sur la ligne ( 2 ) de connexion et un dispositif ( 7 ) de transformation en aval pour la transformation des courants de phase en des composantes de courant de système direct,
• un dispositif ( 10 ) de détection de tension pour les tensions sur les phases de la ligne ( 2 ) de connexion et un autre dispositif ( 12 ) de transformation monté en aval ayant un module ( 15 ) de transformation pour la transformation des tensions en des composantes de tension de système inverse, **caractérisé par**
• un régleur ( 17 ) de tension, qui est monté en aval du module ( 15 ) de transformation et dans lequel il est formé des composantes de courant de système inverse servant à la réduction de système inverse, et
• un régleur ( 9 ) de courant, qui est monté en aval du régleur ( 17 ) de tension et qui a une entrée ( 28 ) de valeurs de consigne recevant les composantes du courant de système inverse, et une entrée ( 8 ) de valeurs réelles détectant des composantes du courant de système direct, le régleur ( 9 ) de courant étant, du côté de la sortie, par l'intermédiaire d'un dispositif ( 29 ) de transformation en retour, relié à des entrées de commutation d'unité de commutation des convertisseurs de courant.

8. Agencement suivant la revendication 7, **caractérisé en ce que**
• l'autre dispositif ( 12 ) de transformation a un autre module ( 19 ) de transformation, qui forme à partir des tensions sur les phases de la ligne ( 2 ) de connexion au moyen d'une transformation des composantes de tension de système direct sur sa sortie,
• il est monté en aval de l'autre module ( 19 ) de transformation un régleur ( 22 ) de tension de puissance réactive, dont la sortie est reliée à une entrée ( 26 ) d'un sommateur ( 25 ) monté en aval, et
• la sortie du régleur ( 17 ) de tension est reliée à une autre entrée ( 24 ) du sommateur ( 25 ), dont la sortie est reliée à l'entrée ( 28 ) de valeurs de consigne du régulateur ( 9 ) de courant.

9. Agencement suivant la revendication 7, **caractérisé en ce que**
• il est raccordé à l'autre module ( 19 ) de transformation un régleur ( 23 ) de tension de puissance réactive, dont la sortie est reliée à une entrée ( 27 ) supplémentaire du sommateur ( 25 ).

10. Agencement suivant la revendication 7, **caractérisé en ce que**
• l'autre dispositif ( 12 ) de transformation a un autre module ( 19 ) de transformation, qui forme à partir des tensions sur les phases de la ligne ( 2 ) de connexion, au moyen d'une transformation, des composantes de tension de système direct sur sa sortie,
• il est monté en aval de l'autre module ( 19 ) de transformation un régleur ( 23 ) de tension de puissance réactive, dont la sortie est reliée à une entrée ( 27 ) supplémentaire d'un sommateur ( 25 ), et
• la sortie du régleur ( 17 ) de tension est reliée à une autre entrée ( 24 ) du sommateur ( 25 ), dont la sortie est reliée à l'entrée ( 28 ) de valeurs de consigne du régleur ( 9 ) de courant.

11. Agencement suivant l'une des revendications 7 à 10, **caractérisé en ce que**
• l'un des modules ( 14 ) de transformation comporte un filtre ( 15 ) pour former des composantes de tension de système inverse et un transformateur ( 16 ) de Park monté en aval de celui-ci et
• l'autre module ( 19 ) de transformation comporte un autre filtre ( 20 ) pour former les composantes de tension de système direct et un autre transformateur ( 21 ) de Park monté en aval de celui-ci.

12. Agencement suivant l'une des revendications 7 à 11, **caractérisé en ce que**
• l'autre dispositif ( 19 ) de transformation a un transformateur ( 13 ) de Clark du côté de l'entrée.

13. Agencement suivant l'une des revendications 7 à 12, **caractérisé en ce que**
• le régleur ( 17 ) de tension a respectivement un régleur PI ( 40, 41 ) pour les composantes de tension de système inverse et
• en aval des deux régleurs PI ( 40, 41 ), est monté un agencement de rotation ( 42 ) vectoriel en obtenant une position en phase à 90° par rapport aux composantes ( 43 ) de tension de système inverse et un agencement de limitation.
